# FASCICULE DE BREVET EUROPEEN

(11) **EP 2 785 474 B1**
(45) Date de publication et mention de la délivrance du brevet: **07.11.2018**
(21) Numéro de dépôt: 12806576.0
(22) Date de dépôt: 27.11.2012
(51) Int. Cl.: B09B 3/00

(54) **ELIMINATION DES PRODUITS DE PROTECTION DES SEMENCES PAR L'UTILISATION DE L'OZONE**
ENTFERNUNG VON SAMENSCHUTZMATERIALIEN DURCH VERWENDUNG VON OZON
REMOVAL OF SEED-PROTECTING MATERIALS THROUGH THE USE OF OZONE

(30) Priorité: 30.11.2011 FR 1160986
(43) Date de publication de la demande: 08.10.2014
(73) Titulaire: Association de Gestion de l'Institut Polytechnique Lasalle Beauvais, 60000 Beauvais (FR)
(72) Inventeur: AUSSENAC, Thierry, Robert, F-60000 Beauvais (FR); COSTE, Christian, Ulysse, F-84870 Loriol du Comtat (FR); HOANG, Levinh, F-60000 Beauvais (FR)
(74) Mandataire: Hart-Davis, Jason
(86) Numéro de dépôt international: PCT/FR2012/052726
(87) Numéro de publication internationale: WO 2013/079862

(56) Documents cités:
- WO-A1-2004/089078
- DE-A1-102008 046 615
- FR-A1- 2 802 390
- UA-A- 69 307

## Description

La présente invention concerne un procédé de mise en oeuvre de ce gaz réactif dans le but d'éliminer les produits de protection des semences réputées déclassées, habituellement détruites par incinération dans des fours de cimenterie.

### Etat de la technique

Aujourd'hui, les traitements systématiques des semences, préalablement à leur enfouissement en pleine terre, assurent une protection des graines, des semis et des jeunes plantules contre les contaminations d'origine tellurique afin d'assurer une mise en place de la culture homogène et saine. L'ajout de produits de protection des plantes et d'autres additifs de type colorant spécifique ou formulant, transforme les semences en un matériau qui requiert des soins appropriés conformes aux réglementations existantes ou en vigueur. Si les semences traitées ne peuvent plus remplir leur finalité initiale, elles doivent être obligatoirement détruites (ces semences sont qualifiées alors de « déclassées »). Aujourd'hui, le recours à l'incinération avec reconversion d'énergie en cimenterie semble, notamment, être devenu la solution d'élimination la plus fréquemment mise en oeuvre en raison notamment de l'application généralisée de l'interdiction de mise en décharge des semences enrobées en France depuis 2005 et, d'autre part, de l'absence de véritables propositions alternatives pour leur élimination.

Le recours à l'incinération pour éliminer les semences déclassées présente un coût économique non négligeable (coût global comprenant l'élimination proprement dite ainsi que les coûts de logistique et de transport). A ce jour, ce coût est en moyenne de 80 à 100 €/tonne de semences éliminées par incinération. Cette approche ne permet bien entendu aucune valorisation ultérieure des ces semences déclassées.

Aujourd'hui, on peut estimer que le tonnage moyen annuel de semences déclassées à éliminer se situe aux environs de 21 000 tonnes en France. Ce qui démontre l'ampleur du problème et l'intérêt de mettre en oeuvre d'autres systèmes d'élimination.

L'utilisation de l'ozone pour traiter des semences a été préconisée notamment dans la demande de brevet WO 95/09523. Le traitement qui est décrit dans cette demande de brevet est appliqué à des semences et des bulbes dans le but exclusif d'améliorer le processus germinatif (germination). Les doses d'ozone utilisées sont relativement faibles, ainsi que la concentration d'ozone dans le gaz vecteur, et les temps de contact, il étant nécessaire de préserver les qualités germinatives des semences ainsi traitées. Il n'est pas question dans cette demande de brevet de l'élimination de produits phytosanitaires déposés sur des semences.

La demande de brevet WO 01/43556 décrit un traitement à l'ozone utilisé pour décontaminer des grains de blé ou de céréales avant mouture. L'application principale de cette demande de brevet concerne le blé de telle sorte qu'après ce traitement et après mouture, les farines obtenues présentent un haut niveau de sécurité alimentaire. Le but recherché par cette demande de brevet est en premier lieu l'élimination des contaminants d'origine biologique, aussi bien les microorganismes que les produits toxiques qui en sont issus, par exemple des mycotoxines. Il est mentionné que l'ozone permet de réduire le taux de chlorpyriphosméthyl, un pesticide présentant une durée de demi-vie dans le sol de 18 jours environ.

Le demande de brevet WO 2004/089078 décrit une méthode de traitement de grains à une température d'au moins 95°C par une combinaison de la vapeur d'eau et de micro-ondes, avec en outre une application de l'ozone.

Les pesticides peuvent être regroupés de la manière suivante en fonction de leurs domaines d'utilisation ainsi que leurs modalités d'utilisation.
i) Protection des semences et semis : produits phytosanitaires (confer tableau I) appliqués en enrobage ou en pelliculage sur la totalité de la surface des semences en synergie avec des colorants et des formulants afin de les protéger contre la faune et la flore d'origine tellurique. En règle générale, ces produits phytosanitaires sont très rémanents, puissants et appliqués à des doses importantes.
   C'est sur l'élimination de ces produits que se focalise la présente invention.
ii) Protection des cultures : produits phytosanitaires appliqués en cours de végétation par pulvérisation aux champs sur les parties aériennes des végétaux concernés afin de les protéger contre la faune et la flore susceptible de compromettre le développement normal des végétaux. En règle générale, ces produits phytosanitaires sont moyennement rémanents, spécifiques et appliqués à des doses faibles. Le chlorpyriphosméthyl mentionné dans la demande de le brevet WO 01/43556 entre dans cette catégorie.
iii) Protection des récoltes durant le stockage : produits phytosanitaires (par exemple, de type malathion, pyrimiphos-methyl et deltaméthrine) appliqués après la récolte durant la phase de stockage des grains afin de les protéger contre la faune (type insecte, larves, moisissures...) susceptible de compromettre leur utilisation finale (alimentaire et/ou non alimentaire). En règle générale, ces produits phytosanitaires sont moyennement rémanents, spécifiques et appliqués à de très faibles doses par des moyens d'application divers et variés connus en soi par l'homme de l'art. Le malathion, par exemple, présente une durée de demi-vie dans le sol de 3 jours environ en conditions d'aérobie, et 30 jours environ en conditions d'anaérobie.

### Résumé de l'invention

La présente publication décrit l'utilisation de l'ozone pour l'élimination de molécules phytosanitaires rémanentes contenues dans des semences végétales. Dans un mode de réalisation préférentiel, la ou les molécule(s) phytosanitaire(s) rémanente(s) éliminées présente un temps de demi-vie dans le sol dans les conditions d'aérobie d'au moins 1 mois, de préférence d'au moins 2 mois. Dans un mode de réalisation préférentiel, les molécule(s) phytosanitaire(s) rémanentes comprend au moins une répertoriées dans le Tableau I plus loin.

La présente invention se rapporte également à un procédé de traitement de semences végétales comportant des molécules phytosanitaires rémanentes comprenant les étapes consistant à :
(a) fournir des semences végétales contaminées par des molécules phytosanitaires rémanentes appliqués en enrobage ou en pelliculage sur la totalité de la surface des semences en synergie avec des colorants et des formulants afin de les protéger contre la faune et la flore d'origine tellurique;
(b) ajuster l'humidité des semences végétales contaminées jusqu'à un taux d'au moins 10% et d'au plus 21% par rapport à la matière sèche ;
(c) mettre en contact l'ozone et les semences végétales contaminées ;
(d) évacuer l'ozone résiduel.

La présente publication se rapporte également à l'utilisation des semences traitées selon le procédé de l'invention dans la préparation de biogaz par fermentation.

### Brève description des Figures

La Figure 1 représente de façon schématique un réacteur d'ozonation qui convient pour la mise en oeuvre de la présente invention.
Les Figures 2 et 3 représentent de façon schématique des manières avantageuses de mettre en oeuvre un procédé selon la présente invention.
La Figure 4 montre la relation entre la quantité d'ozone transféré et la quantité d'eau ajoutée ou avec l'épaisseur du film liquide recouvrant le substrat (semence) à traiter.

### Description détaillée de l'invention

Le traitement des semences est un traitement indispensable pour lutter contre les maladies transmises par les semences et pour protéger les jeunes plantes qui en sont issues contre les parasites naturellement présents dans le sol. Ce traitement assure également une protection contre des attaques précoces de maladies et de parasites en végétation.

Le choix de la ou des substances actives (mode et spectre d'action, persistance...) tient compte des analyses sanitaires des lots bruts de semences qui arrivent dans les stations de conditionnement (et donc des éventuelles maladies présentes qui varient d'une année sur l'autre et du niveau de contamination) ainsi que du type de protection recherchée.

Du fait de la variabilité annuelle de leur potentiel infectieux (nature des maladies et niveau de contamination), ainsi que de leur vieillissement naturel, les lots de semences non commercialisés sont « déclassés » (retirés du circuit de commercialisation) et éliminés sans autres possibilités d'utilisation.

Une protection efficace des semences nécessite d'appliquer de façon homogène sur toute la surface des semences une quantité précise de matières actives adaptées aux différentes maladies et ravageurs (produits de contact, produits systémiques...). Si la surface de la semence (quelle que soit sa structure anatomique) n'est pas entièrement couverte par les produits, c'est la protection qui en souffre et la porte ouverte aux maladies. Actuellement, les produits de traitement utilisés sont efficaces à des doses réduites : 2 à 4 litres de substances actives par tonne de semences.

Un produit de traitement de semences est l'association d'une ou plusieurs substances actives et de formulants dit « inertes chimiquement ». Il est soumis à une autorisation avant sa mise sur le marché et suit des exigences réglementaires très strictes. La réglementation vise à s'assurer de l'innocuité du produit vis-à-vis de l'utilisateur, du consommateur et de l'environnement dans les conditions d'emploi recommandées.

L'application du produit de traitement sur la semence est généralement réalisée dans une chambre dite de pulvérisation. La semence, en arrivant dans cette chambre de pulvérisation, forme un cylindre constitué de grains à l'intérieur duquel la coupelle de liquide projette, par le biais de la force centrifuge, le produit de traitement. Puis, le mélangeur qui suit brasse les semences avec un mouvement rotatif. Dans ces conditions opératoires, il termine l'enrobage et la fixation du produit sur la semence.

L'appareil de traitement utilisé permet d'apporter une quantité précise de matières actives, bien répartie sur la totalité de la surface des semences et ce avec une bonne adhérence des produits. Un ensemble de réglages et de contrôles à toutes les étapes du traitement évite les risques de surdosage ou de sous dosage. Réalisé par des techniciens spécialisés, le réglage des machines intègre de très nombreux paramètres tenant compte en particulier:
- De l'espèce et de la variété à traiter,
- Des caractéristiques de chaque lot de semences (états sanitaires, poids des milles grains, humidité, calibre...),
- De la dose idéale à appliquer, de l'épaisseur du film recherché, des propriétés de la formulation...

Un certain nombre de préparations commerciales sont utilisées pour la protection phytosanitaire des principales espèces végétales (Blé, Maïs, Colza : représentant en moyenne plus de 60% du volume de semences commercialisées en France). Le tableau suivant (tableau I) présente à titre d'exemple non limitatif quelques unes des principales formules utilisées (représentant au-delà de 70% des volumes commercialisés).

**Tableau I**

| Principales préparations de produits phytosanitaires commercialisées en France pour le traitement du blé, du maïs et du colza | | |
|---|---|---|
| **Fludioxonil** | Général | |
| 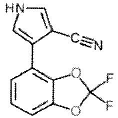 | Nom | 4-(2,2-difluoro-1,3-benzodioxol-4-yl)-1H-pyrrole-3-carbonitrile |
| | No CAS | 131341-86-1 |
| | Propriétés chimiques | |
| | Formule brute | C₁₂H₆F₂N₂O₂ |
| | Masse | 248,1 g.mol⁻¹ |
| | Ecotoxicologie | |
| | DL₅₀ | 5000 mg.kg-1 (rat, oral) |

| **Imidaclopride** | Général | |
|---|---|---|
| 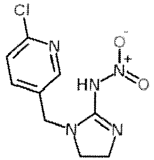 | Nom | 1-((6-Chloro-3-pyridinyl)méthyl)-n-nitro-2-imidazolidinimine |
| | No CAS | 138261-41-3 |
| | Propriétés chimiques | |
| | Formule brute | C₉H₁₀ClN₅O₂ |
| | Masse | 255,7 |
| | Ecotoxicologie | |
| | DL₅₀ | 410 mg/kg (rats, peroral) |

| **Thirame** | Général | |
|---|---|---|
| 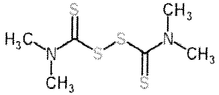 | Nom | Disulfure de tetramethylthiurame Disulfure de bis (N,N-diméthylthiocarbamyle TMTD |
| | No CAS | 137-26-8 |
| | Propriétés chimiques | |
| | Formule brute | C₆H₁₂N₂S₄/(CH₃)₂N-CS-S-S-CS-N(CH₃)₂ |
| | Masse | 240,4 |
| | Ecotoxicologie | |
| | DL₅₀ | 1,25 g/kg (Souris, oral) |

| **Téfluthrine** | Général | |
|---|---|---|
| 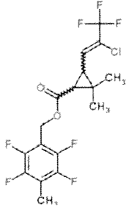 | Nom IUPAC | (2,3,5,6-tetrafluoro-4-methylphenyl)methyl 3-[(Z)-2-chloro-3,3,3-trifluoroprop-1-enyl]-2,2-dimethylcyclopropane-1-carboxylate |
| | No CAS | |
| | Propriétés chimiques | |
| | Formule brute | C₁₇H₁₄ClF₇O₂ |
| | Masse | 418,7 g.mol⁻¹ |
| | Ecotoxicologie | |
| | DL₅₀ | |

| **Prothioconazole** | Général | |
|---|---|---|
| 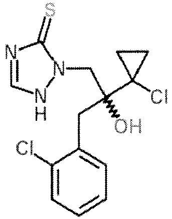 | Nom IUPAC | 2-[2-(1-Chlorcyclopropyl)-3-(2-chlorphenyl)-2-hydroxypropyl]-1,2-dihydro-3H-1,2,4-triazol-3-thion |
| | No CAS | |
| | Propriétés chimiques | |
| | Formule brute | C₁₄H₁₅Cl₂N₃OS |
| | Masse | 344,2 |
| | Ecotoxicologie | |
| | DL₅₀ | |

| **Mefenoxam** | Général | |
|---|---|---|
| 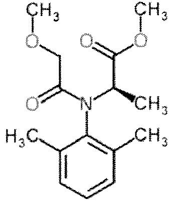 | Nom IUPAC | **N-(2,6-Diméthylphényl)-N-(méthoxyacétyl)-D-alaninate de méthyle** |
| | No CAS | |
| | Propriétés chimiques | |
| | Formule brute | C₁₅H₂₁NO₄ |
| | Masse | 279,3 |
| | Ecotoxicologie | |
| | DL₅₀ | |

| **Thiaméthoxam** | Général | |
|---|---|---|
| 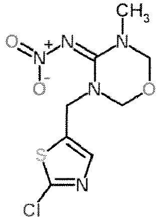 | Nom IUPAC | **4H-1,3,5-oxadiazin-4-imine, 3-[(2-chloro-5-thiazolyl)methyl]tetrahydro-5-methyl-N-nitro-, (4Z)-** |
| | No CAS | |
| | Propriétés chimiques | |
| | Formule brute | C₈H₁₀ClN₅O₃S |
| | Masse | 291,7 |
| | Ecotoxicologie | |
| | DL₅₀ | |

| **Méthiocarb** | Général | |
|---|---|---|
| 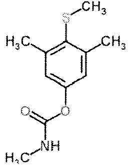 | Nom IUPAC | **Méthylcarbamate de 3,5-diméthyl-4-(méthylsulfanyl)phényle** |
| | No CAS | |
| | Propriétés chimiques | |
| | Formule brute | C₁₁H₁₅NO₂S |
| | Masse | 225,3073 |
| | Ecotoxicologie | |
| | DL₅₀ | 87 mg/kg (chien voie orale) |

| **Beta Cyfluthrin** | Général | |
|---|---|---|
| 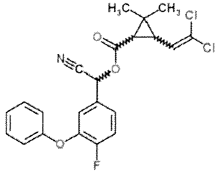 | Nom IUPAC | **3-(2,2-Dichloroéthènyl)-2,2-diméthylcyclopropanecarboxylate de cyano(4-fluoro-3-phénoxyphényl)méthyle** |
| | No CAS | |
| | Propriétés chimiques | |
| | Formule brute | C₂₂H₁₈Cl₂FNO₃ |
| | Masse | 434,2 |
| | Ecotoxicologie | |
| | DL₅₀ | 77 mg/kg (rat voie orale) |

| **Clothianidine** | Général | |
|---|---|---|
| 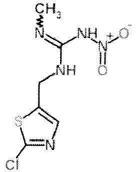 | Nom IUPAC | **1-[(2-Chlor-1,3-thiazol-5-yl)methyl]-2-methyl-3-nitroguanidin** |
| | No CAS | |
| | Propriétés chimiques | |
| | Formule brute | C₆H₈ClN₅O₂S |
| | Masse | 249.678 |
| | Ecotoxicologie | |
| | DL₅₀ | 500 mg/kg (Rat voie orale) |

Les produits phytosanitaires mentionnés dans le tableau I sont peu dégradés dans le milieu naturel. Les temps de demi-vie dans le sol en conditions d'aérobie sont relativement longs. Parmi des valeurs de demi-vie dans le sol répertoriées dans la littérature, on trouve : imidaclopride 180 jours ; mefenoxam 60 jours ; thiamethoxam 229 jours ; methiocarb 64 jours ; clothianidine 214 jours.

La demanderesse a mis en évidence qu'un traitement par l'ozone de semences sur lesquelles étaient déposés des produits phytosanitaires comme ceux indiqués ci-devant (confer tableau I) provoquait la disparition quasi complète des produits phytosanitaires en question, jusqu'aux seuils de détection analytiques normalisés, par attaque chimique de l'ozone sur ces molécules complexes.

Des conditions opératoires avantageuses pour le procédé suivant l'invention seront décrites de façon détaillées dans les paragraphes qui suivent.

Les semences déclassées recouvertes par les produits de protection phytosanitaire, les colorants et les formulants ; semences qui doivent être obligatoirement détruites en cas de non utilisation, ne présentent aucune contrainte de sauvegarde de leurs propriétés germinatives. A titre d'exemple, elles sont aujourd'hui incinérées à hautes températures dans des fours de cimenteries où elles constituent une partie du combustible, donc, de l'apport énergétique nécessaire au procédé de cuisson du clinker dans les fours rotatifs longs.

Le traitement par l'ozone de ces semences déclassées ne présente aucune limitation de dose d'ozone puisqu'aucune utilisation de ces semences déclassées ne peut être envisagée réglementairement. La seule contrainte à ce type de traitement est la contrainte économique (coût de revient total du traitement) dont on peut estimer qu'elle est concurrentielle aux procédés de destruction actuels et qu'elle présente en outre l'avantage de fournir une matière première utilisable pour d'autres applications industrielles (valorisation dans d'autres domaines d'application). Même si la structure tissulaire de la semence est légèrement altérée ou dégradée par le traitement à l'ozone, cela ne présente aucune incidence négative, bien au contraire, dans le cas de l'utilisation ultérieure de ces semences « décontaminées » à d'autres fins technologiques et en particulier :
- dans la production de biogaz par des techniques biologiques (acidogénèse suivie d'une méthanogénèse),
- dans la pyrolyse avec production de char, de gaz combustibles, d'huiles de pyrolyse, qui sont des sous produits hautement valorisables en agriculture ou en production d'énergie,
- dans la production d'intermédiaires chimiques se substituant à l'utilisation de molécules fossiles (synthons ou intermédiaires chimiques), molécules plateformes, base de la chimie fine ou de la pharmacie.
- dans la production d'actifs et/ou ingrédients à vocation non alimentaire,
- et enfin, dans la production de biomatériaux biodégradables.

L'altération des structures tissulaires des semences par le traitement à l'ozone n'est pas un inconvénient en soi car cette altération permet la déconstruction plus aisée de la biomasse quelle représente, par l'ensemble des techniques mises en oeuvre dans les domaines décrits ci-dessus.

Toutes les applications décrites ci-dessus, des semences décontaminées par l'ozone ne sont envisageables que tout autant que le substrat ligno-cellulosique (semences) est parfaitement décontaminé des produits phytosanitaires l'enrobant.

Si aujourd'hui des semences de blé, de maïs, de colza peuvent être ou sont utilisées pour la production de biogaz, de synthons, d'actifs et d'ingrédients et dans la production de biomatériaux, ce n'est que tout autant qu'elles sont exemptes de contaminants phytosanitaires.

En effet, ces contaminants seraient un poison pour les phases d'acidogénèse et de méthanogénèse dans la production de biogaz et bloqueraient totalement le processus. De la même manière, ils seraient un frein rédhibitoire dans la production de synthons, d'actifs ou d'ingrédients à vocation non alimentaire.

Dans les opérations de pyrolyse, la présence de ces contaminants serait génératrice de sous-produits de combustion néfastes pour l'environnement et la santé humaine ou animale.

Dans la production de biomatériaux ils seraient un frein indéniable aux opérations chimiques mises en oeuvre dans l'élaboration de ces matériaux et conduiraient à des résultats aberrants non conformes aux objectifs visés.

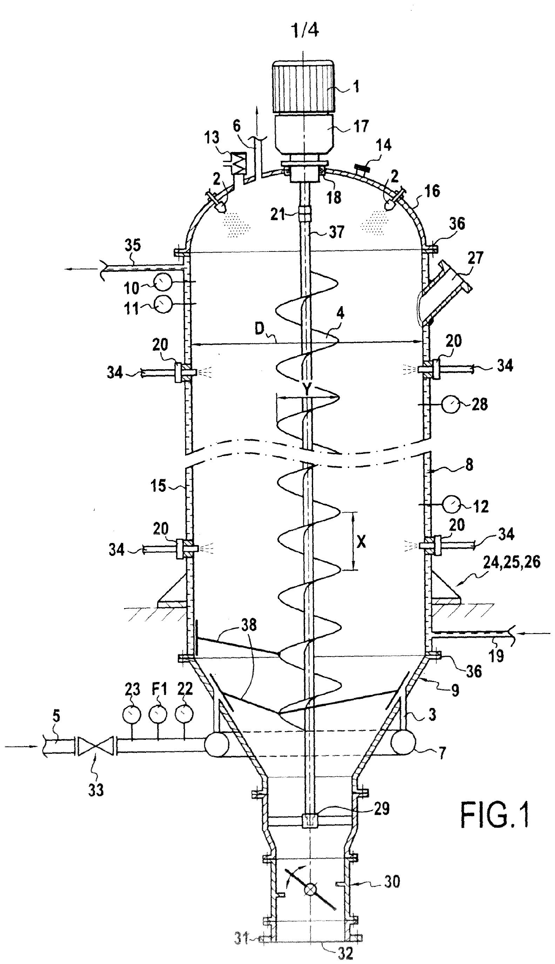

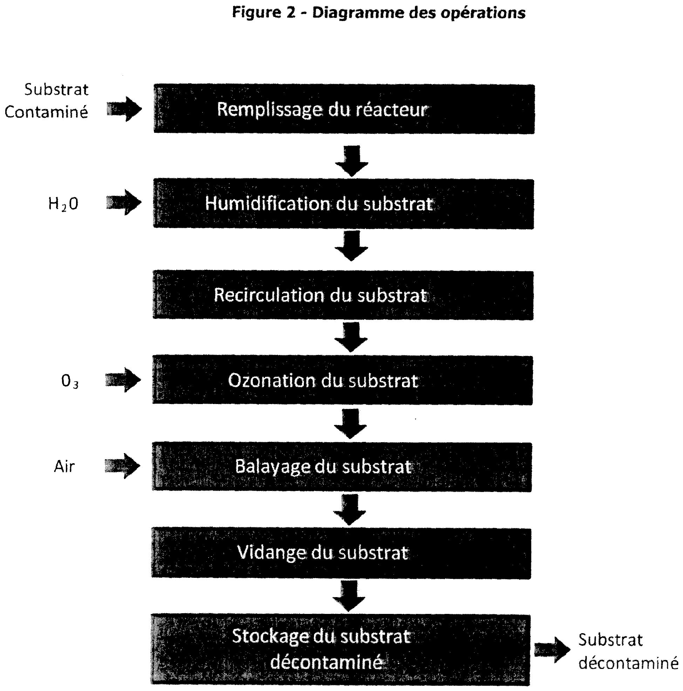

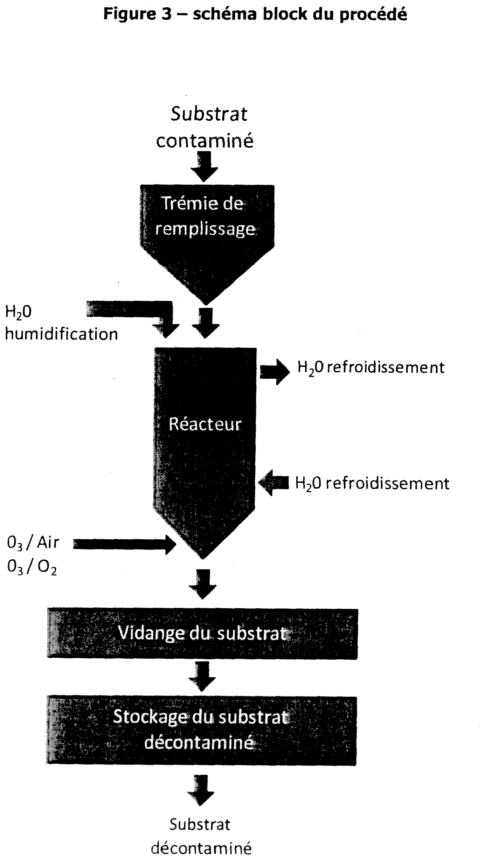

Dans un mode avantageux de mise en oeuvre de l'invention, le traitement des semences déclassées traitées par l'ozone, met en oeuvre un procédé (figures 2 et 3) et des moyens (réacteur (figure 1) de type vertical à recirculation interne comme cela est montré de façon schématique à la figure 1).

Les repères du réacteur illustré à la Figure 1, un exemple non-limitatif d'un réacteur qui convient pour la mise en oeuvre de la présente invention, ont les identités suivantes :
**1** Moteur électrique
**2** Dispositif de pulvérisation d'eau
**3** Injection d'ozone dans le réacteur
**4** Vis de remontée et de recirculation
**5** Arrivée de gaz ozoné Air + O₃ ; O₂ + O₃
**6** Départ ozone résiduel vers destruction
**7** Couronne de distribution d'ozone
**8** Virole cylindrique
**9** Partie conique
**10** Capteur de température
**11** Capteur de pression
**12** Capteur de température
**13** Soupape de sécurité
**14** Disque de rupture
**15** Dispositif externe de refroidissement du corps du réacteur « Water Jacket »
**16** Fond bombé à GRC
**17** Moto-réducteur
**18** Dispositif de centrage et garniture mécanique d'étanchéité
**19** Arrivée eau de refroidissement
**20** Dispositif de lavage interne du réacteur
**21** Accouplement motoréducteur / vis de recirculation
**22** Capteur de température
**23** Capteur de pression
**24/25/26** Dispositif de supportage du réacteur
**27** Arrivée de matière à traiter
**28** Capteur niveau haut
**29** Dispositif de centrage de la vis et de guidage
**30** Vanne d'obturation du réacteur et de vidange
**31** Bride d'accouplement au procédé
**32** Orifice de sortie matière traitée
**33** Vanne de sectionnement arrivée gaz ozoné
**34** Arrivée d'eau sous pression pour buses de lavage
**35** Sortie eau de refroidissement
**36** Brides de centrage et d'accouplement virole/fond/virole/cône bas
**37** Arbre d'entraînement de la vis
**38** Dispositif de raclage interne du réacteur
**FI** Mesure de débit
**x** Pas de la vis de recirculation
**D** Diamètre interne du réacteur
**Y** Dimamètre externe de la vis de recirculation

Préalablement au traitement, en début d'opération, après introduction dans le réacteur (1), les semences peuvent être humidifiées par pulvérisation d'eau, laquelle eau est pulvérisée en fines gouttelettes par le dispositif (2). Dans la première phase du traitement, l'eau qui a été pulvérisée sur la masse de semences en mouvement (vis (4) en fonctionnement). Les graines individualisées se trouvent revêtues à leur périphérie d'un film liquide homogène permettant une amélioration du transfert de l'ozone vers la structure à traiter (voir les explications données dans les paragraphes qui suivent).

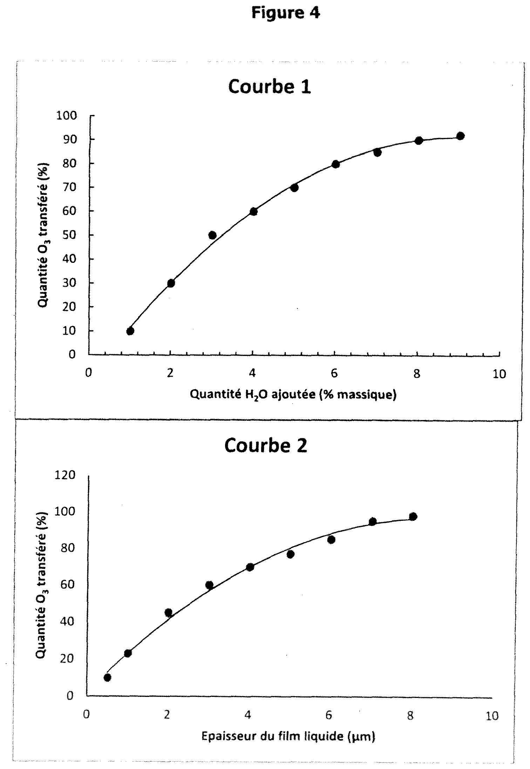

Dans la deuxième phase, l'ozone est admis dans le réacteur par dispositif (3) et les réactions chimiques entre ce gaz et les structures à traiter peuvent être grandement facilitées par la présence du film liquide, lequel film liquide canalise les molécules de gaz réactif vers la structure à traiter. Le principal avantage non limitatif de la présence du film liquide est d'accroître l'accessibilité du gaz ozoné aux molécules phytosanitaires (i.e. matières actives) présentes à la périphérie des graines. Généralement, lors de l'humidification on cherche à obtenir un film liquide à la périphérie des substrats à traiter ; film liquide dont l'épaisseur sera avantageusement comprise entre 1 et 10 µm comme le démontre les courbes 1 et 2 de la Figure 4. Sur la courbe 1, apparaît la représentation de la masse d'eau exprimée en pourcentage de la matière sèche en réaction (eau ajoutée par pulvérisation) en fonction du pourcentage d'ozone transféré vers le substrat à traiter. La courbe 2 représente l'épaisseur du film liquide déposé sur le substrat et exprimée en µm, après pulvérisation et homogénéisation de la masse par recirculation à l'aide de la vis centrale en fonction du pourcentage d'ozone transféré vers le substrat à traiter. L'épaisseur du film liquide peut être approchée par le calcul par l'homme de l'art à partir des données significatives que sont : la masse d'eau ajoutée exprimée en pourcentage de la masse de matière sèche, le poids de 1000 grains (valeur statistique moyenne) ainsi que la surface moyenne développée par 1000 grains. De façon préférentielle, dans le cadre de la présente invention, l'épaisseur du film liquide qui recouvre les substrats (les semences) à traiter sera comprise entre 1 µm et 6 µm.

Dans un mode de réalisation préférentiel, au cours de la troisième phase, la masse de graines préalablement mise en mouvement à l'aide d'une vis sans fin centrale (4), parcourt la zone réactionnelle, avec un mouvement descendant à contre-courant du flux de gaz ozoné. Le flux de gaz est injecté dans le réacteur en partie basse par le dispositif (5). Ce flux de gaz qui peut être indifféremment l'oxygène de l'air, l'oxygène pur ou un mélange en proportion variable des deux traverse le dispositif (5), et est injecté à l'intérieur du réacteur par des injecteurs d'ozone repérés (7 et 3). Le gaz ozoné traverse dans un mouvement ascendant la masse de graines, elle-même animée d'un mouvement descendant tel que décrit ci-dessus. De façon générique, l'opération de mise en contact de l'ozone et des semences à traiter, se fait avantageusement dans un réacteur qui travaille suivant le principe de contre courant gaz/solide.

Après réaction, le résiduel d'ozone présent dans le réacteur peut être évacué en partie haute de celui-ci par le dispositif repéré (6) et dirigé vers une destruction thermique de l'ozone résiduel. Après destruction thermique de l'ozone résiduel présent après réaction, ce dernier est transformé en dioxygène qui est évacué à l'atmosphère.

### Résultats obtenus et commentaires

Les résultats obtenus grâce à la découverte de la demanderesse sont donnés à titre indicatif et non limitatif dans ce qui suit.

La demanderesse a procédé au choix de trois substrats (espèces différentes de semences déclassées) parmi les modèles les plus utilisés commercialement. Ces substrats sont :
- le blé tendre d'hiver (BTH),
- le maïs,
- le colza.

Le blé tendre d'hiver (BTH) représente à lui seul 38% des semences produites et environ 40% des volumes de semences déclassées à éliminer annuellement en France. Le maïs, autre céréale mais de composition chimique et de structure cellulaire très différente, représente 22% des semences produites et environ 24% des volumes de semences déclassées. Enfin, le dernier choix c'est porté sur le colza qui représente quant à lui une production oléagineuse stratégique en raison, notamment, de son utilisation massive en matière de valorisation non alimentaire (par exemple biocarburants). De plus, le modèle colza permet d'accéder à une graine de géométrie (structure et surface spécifique) et de composition chimique initiale très différente de celle d'une céréale (très grande richesse en acides gras).

Le choix de ces trois substrats de structures chimiques et cellulaires différentes, permet de démontrer la validée de l'invention de la demanderesse dans des conditions extrêmes. Economiquement le choix de ces substrats permet d'accéder au traitement d'un très fort pourcentage de semences déclassées (>70%).

Dans les conditions de traitement optimales identifiées jusqu'à présent, neuf des dix molécules phytosanitaires testées disparaissent complètement (concentration résiduelle inférieure à la limite de détection analytique certifiée). Cette disparition par réaction chimique s'effectue avec une durée de réaction de quelques dizaines de minutes (<60 minutes). Seule l'une des molécules phytosanitaires retenues, le [1-((6-Chloro-3-pyridinyl)methyl)-n-nitro-2-imidazolidinimine] plus connue sous son nom commercial « d'Imidaclopride », nécessite un temps de réaction supérieur aux neuf autres temps (>60 minutes). Ce temps de réaction accompli, l'Imidaclopride est éliminé comme les précédentes au seuil de détection analytique certifié.

Un tableau récapitulatif présente l'ensemble des résultats obtenus et des conditions opératoires utilisées pour le traitement par l'ozone de chacune des dix molécules de pesticides.

**Tableaux II (a, b, c)**

| Conditions optimales de traitement obtenues par la demanderesse | | |
|---|---|---|
| **IIa** | | |
| Molécules phytosanitaires actives | Modèle Blé tendre d'hiver (BTH) | |
| | Témoin* (g/kg) | Traitement optimal** (H/O₃/T) |
| Imidaclopride | 0,230 | (5,7/74/66)*** |
| Prothioconazole | 0,012 | (4,0/60/60) |
| Thirame | 0,270 | (4,0/60/60) |
| Téfluthrine | 0,061 | (4,0/60/60) |
| Fludioxonil | 0,018 | (4,0/60/60) |

| **IIb** | | |
|---|---|---|
| | Modèle Maïs | |
| Molécules phytosanitaires actives | Témoin* (g/kg) | Traitement optimal** (H/O₃/T) |
| Imidaclopride | 0,370 | (5,9/75/77)*** |
| Téfluthrine | 0,100 | (6,0/50/40) |
| Fludioxonil | 0,100 | (6,0/50/40) |
| Thiaméthoxam | 0,380 | (6,0/90/40) |
| Méthiocarb | 0,460 | (6,0/50/40) |
| Clothianidine | 0,500 | (6,0/90/40) |
| Mefenoxam | 0,100 | (6,0/50/40) |

| **IIc** | | |
|---|---|---|
| Molécules phytosanitaires actives | Modèle Colza | |
| | Témoin* (g/kg) | Traitement optimal** (H/O₃/T) |
| Imidaclopride | 0,440 | (9,6/95/80)*** |
| Thirame | 1,550 | (8,0/60/40) |
| Beta Cyfluthrine | 0,670 | (8,0/120/40) |
| Clothianidine | 1,040 | (8,0/120/40) |

| | | |
|---|---|---|
| (*) Concentration en molécules phytosanitaires initialement retrouvées sur les substrats avant traitement à l'ozone. (**) Conditions opératoires optimales permettant d'obtenir des concentrations résiduelles en molécules phytosanitaires inférieures ou égales aux seuils de détections analytiques normalisés. (***) Conditions opératoires optimales (humidité en % massique / Concentration en ozone en g.m⁻³ TPN / temps réactionnel en minutes). Les valeurs TPN sont les valeurs à température et à pression normales. | | |

L'examen détaillé des tableaux ci-dessus conduit aux remarques qui suivent :
- Dans les colonnes « Témoin » repérées (*) figurent les teneurs initiales en produits phytosanitaires déposés à la surface des différents substrats. Comme expliqué dans les paragraphes précédents, ces teneurs initiales sont fonction du choix de la substance active (mode et spectre d'action, persistance...) et tiennent compte des analyses sanitaires des lots bruts de semences qui arrivent dans les stations de conditionnement (et donc des éventuelles maladies présentes qui varient d'une année sur l'autre et du niveau de contamination) ainsi que du type de protection recherchée.
- Les « traitements optimaux » repérés (**), comportent systématiquement trois valeurs. La première de ces valeurs est le pourcentage massique d'humidité apporté avant le début de la réaction et avant introduction de l'ozone. Ce pourcentage massique d'humidité est très dépendant de la nature du substrat traité ce qui explique que pour le modèle BTH (tableau IIa), la moyenne d'humidification massique soit égale à 4% (M/M), alors que cette moyenne est de 6% pour le modèle Maïs (tableau IIb) et de 8% pour le modèle Colza (tableau IIc), avec 3 points singuliers qui correspondent à l'« Imidaclopride » (7,5%, 5,9% et 9,6% pour le modèle BTH, le modèle Maïs et le modèle Colza respectivement). La deuxième de ces valeurs correspond à la concentration en ozone dans le gaz vecteur (air, oxygène pur ou mélange variable des deux gaz) exprimée en g.m⁻³ TPN. Enfin, la troisième valeur correspond à la durée globale de la réaction ; durée globale mesurée depuis le début de l'introduction de l'ozone dans le réacteur. Comme on peut le constater, ces temps de réaction varient peu, ils sont identiques pour un même substrat sauf dans le cas de la destruction de l'« Imidaclopride » pour lequel ceux-ci sont supérieurs à une valeur moyenne de 60 minutes pour le modèle BTH, 40 minutes pour le modèle Maïs et 40 minutes pour le modèle Colza. En raison de la composition particulière des semences de Colza, composition dont la singularité a déjà été signalée (forte teneur en acides gras), il est préférable d'utiliser des concentrations en ozone supérieures à celles constatées pour les autres substrats testés (à titre d'exemple 120 g.m⁻³ TPN pour le modèle Colza). De façon très générale dans le cadre de la présente invention, les semences contaminées sont exposées à l'ozone à une concentration dans le gaz vecteur d'au moins 40 g.m⁻³ TPN et au plus de 140 g.m⁻³ TPN, de préférence d'au moins 60 g.m⁻³ TPN et d'au plus 140 g.m⁻³ TPN, plus préférentiellement d'au moins 90 g.m⁻³ TPN et d'au plus 120 g.m⁻³ TPN, TPN signifiant les valeurs à température et à pression normales.

### Paramètres préférés de l'invention

Les paramètres techniques principaux mis en évidence par la demanderesse seront détaillés dans la suite du texte.

Une certaine humidification des semences à traiter est nécessaire ; cette humidification favorisant la réaction avec l'ozone. Il est à noter que les semences se présentent généralement sous forme peu humide (6-13% M/M). L'humidification préalable du substrat revêtu de produits phytosanitaires avant la mise en contact avec l'ozone est un paramètre potentiellement important du procédé qui peut influer tout à la fois sur la vitesse de réaction, sur la pénétration de l'ozone dans le substrat, et sur le taux d'élimination de la molécule phytosanitaire. Cette humidification peut s'exprimer en pourcentage massique (M/M) de la masse initiale de substrat à traiter. Dans le procédé selon la présente invention, la quantité d'eau introduite à l'étape (b) est préférentiellement d'au moins 2% et d'au plus 10% en masse par rapport à la masse des semences à traiter. L'opération d'humidification est préférentiellement réalisée à partir d'eau du réseau réputée potable par le dispositif repéré (2).

Afin de ménager une accessibilité de l'eau à l'ensemble des particules de substrat et de créer un film liquide homogène, la masse d'eau nécessaire à l'humidification peut avantageusement être pulvérisée à l'intérieur du réacteur par une ou plusieurs buses de pulvérisation (2) de type LECHLER ou similaire, l'angle de pulvérisation étant compris entre 30° et 90°, préférentiellement 60°.

Corrélativement à la pulvérisation de l'eau, la vis centrale du réacteur (4) peut avantageusement être mise en mouvement pour assurer un renouvellement d'interface et assurer une homogénéisation du film liquide.

La vitesse de rotation appropriée de la vis centrale est très dépendante de la nature du substrat, de sa distribution granulométrique et du maître couple présenté par le substrat. Cette vitesse de rotation est ajustable par l'intermédiaire d'un variateur de fréquence du courant électrique alimentant le moteur d'entrainement de la vis centrale repérée (4). Cette vitesse de rotation est également dépendante du diamètre du réacteur utilisé repéré (D). Elle se situe généralement entre 25 tours/minute et 110 tours/minute, préférentiellement aux environs de 65 tours/minute.

Le pas de la vis centrale repéré (X), lequel détermine le taux de recirculation de la masse de substrat en traitement, est sous la dépendance du diamètre de la vis centrale (Y) et de la géométrie du substrat (distribution granulométrique et maître couple présenté par les semences à traiter).

Le taux de recirculation de la masse de substrat en cours de traitement est généralement compris entre 5 et 70 recirculations/minute, préférentiellement entre 15 et 20 recirculations/minute.

La quantité d'ozone nécessaire à l'élimination des molécules phytosanitaires fixées à la surface du substrat peut être produite *in situ* par un générateur d'ozone de type industriel alimenté, soit en air, soit en oxygène gazeux pur, soit par un mélange en quantité variable des deux gaz.

Pour les faibles concentrations d'ozone (jusqu'à 60 g.m⁻³ TPN), le gaz vecteur utilisé sera avantageusement l'air atmosphérique, filtré, séché jusqu'à un point de rosée de l'ordre de -70°C à -75°C.

Pour les concentrations supérieures à 60 g.m⁻³ TPN, l'oxygène gazeux sera avantageusement utilisé, oxygène gazeux provenant de l'évaporation contrôlée d'oxygène liquide stocké dans des cuves spécialement aménagées pour cet usage.

Dans ces conditions opératoires l'oxygène gazeux présentera un point de rosée de l'ordre de -85°C minimum, et permettra d'atteindre une concentration en ozone dans ce gaz vecteur de l'ordre de 200 g.m⁻³ TPN.

L'utilisation du mélange en proportions variables d'air et d'oxygène gazeux, permet d'obtenir des points de rosée de l'ordre de -70°C à -75°C et des concentrations de l'ordre de 100 à 120 g.m⁻³ TPN.

L'ozone peut être introduit à la base du réacteur par une couronne de buses d'injection repérée (7) dont le diamètre d'implantation est très dépendant du diamètre du réacteur, de sa position sur le cône inférieur du réacteur, de la géométrie du substrat à traiter, et de la hauteur de la couche de substrat à traiter définissant elle-même la hauteur totale de transfert (HTT) du réacteur.

La vitesse d'éjection du gaz ozoné par les buses d'injection repérées (3) est un paramètre qui peut avoir une grande influence sur le fonctionnement du réacteur. Cette vitesse peut être calculée en fonction de la distribution granulométrique du substrat à traiter, de la HTT et du diamètre du réacteur. Cette vitesse d'éjection sera généralement comprise entre 15 m.s⁻¹ et 50 m.s⁻¹, préférentiellement comprise entre 20 m.s⁻¹ et 30 m.s⁻¹.

D'une façon générale il a été observé et constaté que les paramètres qui suivent conduisent à des résultats optimaux en termes de destruction et d'élimination des pesticides déposés sur les semences dites déclassées :
- Le rapport caractéristique diamètre de la vis centrale (4)/diamètre du réacteur (D) sera avantageusement compris entre 0,3 et 0,7, de préférence entre 0,45 et 0,50 ;
- Le rapport caractéristique pas de la vis (X)/diamètre de la vis (Y) sera avantageusement compris 0,30 et 0,80, de préférence entre 0,40 et 0,55 ;
- Le taux de remplissage de la vis sera avantageusement compris entre 97% et 99% ;
- La vitesse de rotation de la vis (4) sera avantageusement comprise entre 20 et 110 tours/minute, de préférence entre 55 et 60 tours/minute avec possibilité de variation continue de la vitesse de rotation dans cette plage, pour satisfaire à la géométrie des grains à traiter ainsi qu'à leur diamètre qui sont des grandeurs variables ;
- Le rapport caractéristique hauteur utile du réacteur (HTT)/diamètre du réacteur (D) sera avantageusement compris entre 1,8 et 2,8, de préférence entre 2,3 et 2,6 ;
- L'angle du cône de base sera avantageusement compris entre 70° et 110°, préférentiellement entre 80° et 90°.

L'intérieur du réacteur peut être avantageusement muni de dispositif de lavage interne repéré (20), constitué par des boules de lavage connues de l'homme de l'art et alimentées en eau sous pression (34).

La partie supérieure du réacteur (fond bombé) (16) comporte différents organes de sécurité et en particulier une soupape de sécurité tarée (13) ainsi qu'un disque de rupture (14). Un orifice d'évacuation d'ozone résiduel (6) permet d'évacuer l'ozone résiduel vers la destruction thermique de l'ozone.

Dans la partie centrale le fond bombé supérieur comporte, fixé sur brides, l'ensemble moteur électrique/motoréducteur (17) monté sur un dispositif de centrage à garnitures mécaniques d'étanchéité (18). En sortie de motoréducteur un accouplement démontable (21) permet l'accouplement du motoréducteur (17) à la vis centrale de recirculation (4).

La virole cylindrique du réacteur comporte différents piquages sur lesquels sont montés des capteurs de température (10, 12 et 22), des capteurs de pression (11 et 23), des dispositifs d'admission d'eau de lavage aux boules de lavage (20).

La virole du réacteur comporte également des dispositifs de supportage du réacteur (24, 25 et 26) disposés sur le diamètre du réacteur à 120°. La virole comporte également en partie haute une arrivée de matière à traiter (27), un capteur de niveau haut (28).

En partie basse, la virole cylindrique est fermée par une partie conique (9) dont l'angle est spécifié dans les paragraphes qui précédent. Ce cône bas est suivi d'une partie cylindrique permettant le dégagement de la vis et comporte dans sa partie centrale un dispositif de centrage et de guidage de la vis (29) ainsi qu'une vanne d'obturation et de vidange (30) ainsi qu'une bride d'accouplement au procédé (31). L'orifice de sortie de matière traitée est repéré (32).

Après réaction, l'ozone résiduel en excès peut être évacué en partie haute du réacteur (6) et dirigé vers une destruction d'ozone résiduel de type thermique avec ou sans récupération d'énergie suivant la taille de l'installation.

A la sortie de la destruction thermique de l'ozone résiduel l'oxygène issu de cette destruction peut être évacué à l'atmosphère.

Généralement les réactions de type gaz/solide sont sous la dépendance de la pression d'application de l'ozone sur le substrat ; c'est-à-dire de la pression régnant dans le réacteur. Il a été observé dans le cadre de la présente invention que la pression d'application avait une très faible incidence sur le transfert de l'ozone et de ce fait sur la cinétique réactionnelle. Il en a été déduit par les inventeurs les prescriptions suivantes : la pression à l'intérieur du réacteur sera avantageusement comprise entre 0,05 bars et 0,3 bars, préférentiellement aux environs de 0,16 bars relatifs ; ce qui en termes de pression absolue signifie 0,05 bars au dessus de la pression atmosphérique.

Dans la présente invention, la réaction de mise en contact des semences avec l'ozone s'effectue de préférence autour de la température ambiante de laboratoire, le plus souvent aux alentours de 20°C. La température de la réaction chimique ozone sur molécules phytosanitaires, n'étant que très légèrement exothermique (5°C < Δ température < 12 °C), en fonction de la ou des molécules a traiter, la réaction de destruction se déroule naturellement aux environs de la température ambiante, c'est-à-dire aux environs de 20°C, aidé en cela par le refroidissement prévu sur le réacteur (présence d'un water jacket).

La zone de température réactionnelle est donc définie de préférence comme suit : 10°C ≤ température réactionnelle ≤ 32°C, préférentiellement 17°C ≤ température réactionnelle ≤ 25°C.

Il apparait donc clairement que le procédé découvert par la demanderesse ne nécessite aucun chauffage du milieu réactionnel, donc aucun apport d'énergie thermique ou d'énergie de pré-activation ou d'activation moléculaire pour favoriser la réaction de destruction des produits phytosanitaires.

Ainsi, dans un mode préférentiel de mise en oeuvre de l'invention, le réacteur de traitement des semences n'est sujet à aucun procédé de chauffage par exemple par le biais d'un contact avec un fluide (liquide ou gaz) porté à une température supérieure à la température ambiante. Aucun chauffage des semences avant, pendant ou après la mise en contact avec l'ozone n'est nécessaire pour décontaminer les semences selon la présente invention. Egalement dans un mode préférentiel de mise en oeuvre de l'invention, les semences à traiter ne sont pas soumises à des rayonnements (par exemple : ultraviolets, infrarouges, micro-ondes). Un traitement aux rayonnements avant, pendant ou après la mise en contact avec l'ozone n'est nécessaire pour décontaminer les semences selon la présente invention.

Le temps réactionnel est sous la dépendance de la cinétique d'élimination par l'ozone des molécules phytosanitaires. A chaque molécule correspond une cinétique particulière ; laquelle sera sous la dépendance de la concentration d'ozone utilisé.

Dans le cadre de la présente invention, un temps réactionnel approprié est généralement compris entre 30 minutes et d'au plus 100 minutes, de préférence d'au moins 40 minutes et d'au plus 90 minutes, et plus préférentiellement entre 40 et 60 minutes.

Concernant le type et la géométrie du réacteur, le réacteur utilisé sera de manière approprié du type gaz/solide à recirculation interne. Il peut se présenter sous la forme d'une virole cylindrique (8) fermée en partie basse par une partie conique, comme déjà décrit. La virole cylindrique peut avantageusement comporter une double enveloppe de type WATER JACKET (15) permettant d'assurer le refroidissement continu du réacteur et la maîtrise des flux thermiques générés par certaines réactions de type exothermique. Le refroidissement se fait alors par circulation d'eau refroidie ou par un fluide frigorigène refroidi introduit dans le WATER JACKET par l'orifice (19) et récupéré en sortie de WATER JACKET par l'orifice repéré (35).

Ce WATER JACKET peut comporter des dispositifs canalisant le flux d'eau ou de fluide frigorigène de telle sorte que la mise en vitesse et la turbulence de ces fluides soit optimale pour assurer un refroidissement efficace.

Les figures 2 et 3 présentent des schémas globaux d'un mode préférentiel de procédé selon l'invention.

## Revendications

1. Procédé de traitement de semences végétales comportant des molécules phytosanitaires rémanentes comprenant les étapes consistant à :
(a) fournir des semences végétales contaminées par des molécules phytosanitaires rémanentes appliquées en enrobage ou en pelliculage sur la totalité de la surface des semences en synergie avec des colorants et des formulants afin de les protéger contre la faune et la flore d'origine tellurique;
(b) ajuster l'humidité des semences végétales contaminées jusqu'à un taux d'au moins 10% et d'au plus 21% par rapport à la matière sèche ;
(c) mettre en contact l'ozone et les semences végétales contaminées ;
(d) évacuer l'ozone résiduel.

2. Procédé selon la revendication 1 dans lequel une quantité d'eau est introduite à l'étape (b), cette quantité étant d'au moins 2% et d'au plus 10% en masse par rapport à la masse des semences à traiter.

3. Procédé selon la revendication 2, dans lequel la quantité d'eau apportée est appliquée par pulvérisation à l'aide d'une buse afin de créer un film liquide d'une épaisseur comprise entre 1 et 6 µm.

4. Procédé selon l'une quelconque des revendications 1 à 3, dans lequel les semences contaminées sont exposées à l'ozone à une concentration dans le gaz vecteur d'au moins 40 g.m⁻³ TPN et au plus de 140 g.m⁻³ TPN, de préférence d'au moins 60 g.m⁻³ TPN et d'au plus 140 g.m⁻³ TPN, plus préférentiellement d'au moins 90 g.m⁻³ TPN et d'au plus 120 g.m⁻³ TPN, TPN signifiant les valeurs à température et à pression normales.

5. Procédé selon l'une quelconque des revendications 1 à 4, dans lequel la durée de traitement par l'ozone est d'au moins 30 minutes et d'au plus 100 minutes, de préférence d'au moins 40 minutes et d'au plus 60 minutes.

6. Procédé selon l'une quelconque des revendications 1 à 5, dans lequel la température réactionnelle pendant l'exposition des semences contaminées à l'ozone est d'au moins 10°C et d'au plus 32°C, de préférence au moins 17°C et au plus 25°C.

7. Procédé selon l'une quelconque des revendications 1 à 6, dans lequel les semences contaminées ne sont pas soumises à des rayonnements, tels que des rayonnements ultraviolets, infrarouges, et/ou micro-ondes.

8. Procédé selon l'une quelconque des revendications 1 à 7, dans lequel la semence végétale traitée comprend le blé, le maïs ou le colza.

9. Procédé selon l'une quelconque des revendications 1 à 8, dans laquelle la ou les molécule(s) phytosanitaire(s) rémanentes éliminées présente un temps de demi-vie dans le sol dans les conditions d'aérobie d'au moins 1 mois, de préférence d'au moins 2 mois.

10. Procédé selon l'une quelconque des revendications 1 à 9, dans lequel les molécules phytosanitaires rémanentes éliminées comprennent au moins l'une choisie parmi : le fludioxonil, l'imidaclopride, le thirame, la téfluthrine, le prothioconazole, le méfenoxam, le thiaméthoxam, le méthiocarb, la bétacyfluthrine et la clothianidine.

11. Procédé selon l'une quelconque des revendications 1 à 10, comprenant en outre une étape consistant à ;
- utiliser les semences ainsi traitées pour la préparation de biogaz par fermentation.

12. Procédé selon l'une quelconque des revendications 1 à 10, comprenant en outre une étape consistant à;
- utiliser les semences ainsi traitées pour la pyrolyse avec production de char, de gaz combustibles, et/ou d'huiles de pyrolyse.

## Patentansprüche

1. Verfahren zur Behandlung von Pflanzensamen, umfassend nicht-flüchtige phytosanitäre Moleküle, umfassend die Schritte bestehend aus:
(a) Bereitstellen von Pflanzensamen, welche durch nicht-flüchtige phytosanitäre Moleküle verunreinigt sind, die als Beschichtung oder als Überzug auf der Gesamtheit der Oberfläche der Samen in Synergie mit Färbemitteln und Formulierungen aufgebracht sind, um sie gegen die Fauna und Flora vom Lande aus zu schützen,
(b) Einstellen der Feuchtigkeit der verunreinigten Pflanzensamen bis zu einem Gehalt von mindestens 10 % und höchstens 21 % in Bezug auf das Trockenmaterial,
(c) Inkontaktbringen von Ozon und den verunreinigten Pflanzensamen,
(d) Abführen des verbleibenden Ozons.

2. Verfahren nach Anspruch 1, wobei eine Menge an Wasser in Schritt (b) eingebracht wird, wobei diese Menge mindestens 2 Masse-% und höchstens 10 Masse-% in Bezug auf die Masse der zu behandelnden Samen beträgt.

3. Verfahren nach Anspruch 2, wobei die eingebrachte Menge an Wasser durch Zerstäubung mit Hilfe einer Düse angewendet wird, um einen Flüssigkeitsfilm mit einer Dicke zwischen 1 und 6 µm zu erzeugen.

4. Verfahren nach einem der Ansprüche 1 bis 3, wobei die verunreinigten Samen dem Ozon in einer Konzentration im Vektorgas von mindestens 40 g.m⁻³ TPN und höchstens 140 g.m⁻³ TPN, vorzugsweise mindestens 60 g.m⁻³ TPN und höchstens 140 g.m⁻³ TPN, bevorzugter mindestens 90 g.m⁻³ TPN und höchstens 120 g.m⁻³ TPN, ausgesetzt werden, wobei TPN die Werte bei normaler Temperatur und normalem Druck bedeutet.

5. Verfahren nach einem der Ansprüche 1 bis 4, wobei die Dauer der Behandlung mit dem Ozon mindestens 30 Minuten und höchstens 100 Minuten, vorzugsweise mindestens 40 Minuten und höchstens 60 Minuten, beträgt.

6. Verfahren nach einem der Ansprüche 1 bis 5, wobei die Reaktionstemperatur während des Aussetzens der verunreinigten Samen an das Ozon mindestens 10°C und höchstens 32°C, vorzugsweise mindestens 17°C und höchstens 25°C, beträgt.

7. Verfahren nach einem der Ansprüche 1 bis 6, wobei die verunreinigten Samen keinen Strahlungen unterworfen werden, wie Ultraviolett-, Infrarot- und/oder Mikrowellenstrahlungen.

8. Verfahren nach einem der Ansprüche 1 bis 7, wobei der behandelte Pflanzensamen Weizen, Mais oder Raps umfasst.

9. Verfahren nach einem der Ansprüche 1 bis 8, wobei das oder die eliminierten nicht-flüchtigen phytosanitären Moleküle eine Halbwertszeit im Boden unter aeroben Bedingungen von mindestens 1 Monat, vorzugsweise mindestens 2 Monaten, aufweisen.

10. Verfahren nach einem der Ansprüche 1 bis 9, wobei die eliminierten nicht-flüchtigen phytosanitären Moleküle mindestens eines umfassen, ausgewählt aus: Fludioxonil, Imidacloprid, Thiram, Tefluthrin, Prothioconazol, Mefenoxam, Thiamethoxam, Methiocarb, Betacyfluthrin und Clothianidin.

11. Verfahren nach einem der Ansprüche 1 bis 10, außerdem umfassend einen Schritt bestehend aus:
- Verwenden der so behandelten Samen zur Herstellung von Biogas durch Fermentation.

12. Verfahren nach einem der Ansprüche 1 bis 10, außerdem umfassend einen Schritt bestehend aus:
- Verwenden der so behandelten Samen zur Pyrolyse mit der Erzeugung von Holzkohle, brennbaren Gasen und/oder Pyrolyseölen.

## Claims

1. A process for treating plant seeds containing long-lasting plant protection molecules, comprising the steps consisting in:
(a) providing plant seeds contaminated by long-lasting plant protection molecules applied as a coating or a film over the entire surface of the seeds in synergy with dyes and formulants in order to protect them against soil-based fauna and flora;
(b) adjusting the moisture content of the contaminated plant seeds to at least 10% and at most 21% relative to the dry matter;
(c) placing the contaminated plant seeds in contact with ozone;
(d) evacuating residual ozone.

2. The process as claimed in claim 1 wherein an amount of water is introduced in step (b), this amount being at least 2% and at most 10% by mass relative to the mass of the seeds to be treated.

3. The process as claimed in claim 2, wherein the amount of water supplied is applied by spraying with a nozzle in order to create a liquid film having a thickness comprised between 1 and 6 µm.

4. The process as claimed in any one of claims 1 to 3, wherein the contaminated seeds are exposed to ozone at a concentration in the carrier gas of at least 40 g.m⁻³ NTP and at most 140 g.m⁻³ NTP, preferably of at least 60 g.m⁻³ NTP and at most 140 g.m⁻³ NTP, more preferentially of at least 90 g.m⁻³ NTP and at most 120 g.m⁻³ NTP, NTP meaning the values at normal temperature and pressure.

5. The process as claimed in any one of claims 1 to 4, wherein the ozone treatment duration is at least 30 minutes and at most 100 minutes, preferably at least 40 minutes and at most 60 minutes.

6. The process as claimed in any one of claims 1 to 5, wherein the reaction temperature during exposure of the contaminated seeds to ozone is at least 10°C and at most 32°C, preferably at least 17°C and at most 25°C.

7. The process as claimed in any one of claims 1 to 6, wherein the contaminated seeds are not subjected to radiation, such as ultraviolet, infrared, and/or microwave radiation.

8. The process as claimed in any one of claims 1 to 7, wherein the treated plant seed comprises wheat, maize or rapeseed.

9. The process as claimed in any one of claims 1 to 8, wherein the long-lasting plant protection molecule(s) removed has/have a half-life in soil under aerobic conditions of at least 1 month, preferably at least 2 months.

10. The process as claimed in any one of claims 1 to 9, wherein the long-lasting plant protection molecules removed comprise at least one selected from: fludioxonil, imidacloprid, thiram, tefluthrin, prothioconazole, mefenoxam, thiamethoxam, methiocarb, beta-cyfluthrin and clothianidin.

11. The process as claimed in any one of claims 1 to 10, further comprising a step consisting in;
- using the seeds thus treated for the preparation of biogas by fermentation.

12. The process as claimed in any one of claims 1 to 10, further comprising a step consisting in;
- using the seeds thus treated for pyrolysis with production of char, combustible gases, and/or pyrolysis oils.
